# FASCICULE DE BREVET EUROPEEN

(11) **EP 2 162 406 B1**
(45) Date de publication et mention de la délivrance du brevet: **23.11.2011**
(21) Numéro de dépôt: 08806023.1
(22) Date de dépôt: 18.06.2008
(51) Int. Cl.: C03C 25/34, C08L 61/06, B24D 3/34, C08L 61/10, C08L 91/06, C08L 23/06, C08J 5/08, C08J 5/14

(54) **STRUCTURE DE FILS DE VERRE DESTINEE A RENFORCER DES ARTICLES ABRASIFS AGGLOMERES**
GLASFASERSTRUKTUR ZUR VERSTÄRKUNG AGGLOMERIERTER SCHLEIFOBJEKTE
GLASS FIBRE STRUCTURE FOR REINFORCING AGGLOMERATED ABRASIVE OBJECTS

(30) Priorité: 18.06.2007 FR 0755818
(43) Date de publication de la demande: 17.03.2010
(73) Titulaire: Saint-Gobain Technical Fabrics Europe, 73000 Chambéry (FR)
(72) Inventeur: ARNAUD, Alix, F-92120 Montrouge (FR); ESPIARD, Philippe, F-60270 Gouvieux (FR); CEUGNIET, Claire, F-73410 Saint Ours (FR)
(74) Mandataire: Jamet, Vincent
(86) Numéro de dépôt international: PCT/FR2008/051088
(87) Numéro de publication internationale: WO 2009/004250

(56) Documents cités:
- DD-A1- 227 920
- DE-A1- 4 321 938
- GB-A- 1 151 174
- US-A- 4 338 357

## Description

La présente invention se rapporte au domaine des abrasifs. Elle concerne plus précisément une structure à base de fils de verre revêtue d'une composition résinique destinée à renforcer des articles abrasifs agglomérés, en particulier des meules, la composition résinique utilisée pour revêtir cette structure et les articles abrasifs agglomérés incorporant une telle structure.

Les articles abrasifs renferment une multitude de particules abrasives solidement liées entre elles par un liant. Ces articles sont largement employés pour l'usinage de pièces en matériaux divers, notamment dans les opérations de découpe, d'ébavurage, de rectification et de polissage.

De manière classique, on distingue :
- les articles abrasifs appliqués (« coated abrasives ») qui comprennent un support flexible à la surface duquel sont réparties des particules abrasives enchâssées dans un liant. Le support flexible peut être une feuille de papier ou un réseau de fibres, par exemple un mat, un feutre ou un tissu. Ces articles peuvent adopter des formes variées : feuilles, disques, courroies, cônes, ...
- les articles abrasifs agglomérés (« bonded abrasives ») qui sont obtenus à partir d'un mélange de particules abrasives et de liant, mis en forme et rendu compact par moulage sous pression. Il s'agit pour l'essentiel de meules abrasives.

Les articles abrasifs agglomérés auxquels se rapporte plus particulièrement l'invention sont des meules abrasives utilisées pour découper des matériaux durs, notamment de l'acier. Ces meules sont mises en oeuvre sur des machines fonctionnant à une vitesse périphérique élevée, et de ce fait elles doivent pouvoir résister aux fortes contraintes mécaniques engendrées par cette celle-ci.

En particulier, il est important que les exigences suivantes soient satisfaites :
- les particules abrasives doivent être adaptées à la nature du matériau à traiter : elles doivent être suffisamment solides pour ne pas s'effriter au contact dudit matériau, et conserver des arêtes suffisamment acérées pour pouvoir le couper,
- le liant doit présenter une bonne résistance à la rupture en traction afin que les particules abrasives restent liées à lui et ne soient pas arrachées sous l'effet de la force centrifuge. En outre, le liant doit pouvoir résister aux températures élevées qui résultent des frottements importants avec le matériau à traiter ; le liant ne doit ni fluer ni être dégradé sous l'effet de la chaleur,
- la meule abrasive ne doit pas s'user prématurément ni éclater; elle doit garder ses caractéristiques dimensionnelles initiales le plus longtemps possible pour que la découpe s'effectue dans de bonnes conditions.

Il est usuel de consolider la meule abrasive en y incorporant au moins une structure à base de fils de renforcement, notamment de fils de verre, qui peut se présenter par exemple sous la forme d'un tissu.

Toutefois, étant donné que les fils de verre nu n'ont quasiment aucune adhérence avec le liant, il est nécessaire de revêtir la structure de fils de verre d'une composition résinique qui assure la liaison entre le verre et le liant.

De manière connue, on obtient la structure de renforcement en faisant passer les fils de verre dans un bain d'une composition résinique constituée d'une solution alcoolique renfermant de l'ordre de 70 % en poids d'une résine, puis entre deux rouleaux de manière à éliminer l'excédent de résine, et enfin dans une enceinte chauffée à une température de l'ordre de 100 à 145°C pendant quelques minutes au maximum afin de réduire la quantité de solvant par rapport à la résine jusqu'à une valeur d'environ 5 % à 10 %. La structure de renforcement ainsi obtenue est collectée sous la forme d'un enroulement, par exemple une bobine, ou découpée soit en feuilles soit directement à la forme et aux dimensions désirées de la meule finale, par exemple au moyen d'un emporte-pièce.

Dans une étape ultérieure, la meule abrasive est obtenue selon le procédé qui consiste à déposer dans un moule, en alternance, plusieurs couches du mélange, des particules abrasives et de liant d'une part, et de la structure de renforcement d'autre part, et à mouler l'ensemble par compression, à froid ou à chaud. Après démoulage, l'article obtenu est traité thermiquement dans des conditions de température permettant de réticuler le liant et finalement obtenir la meule abrasive.

Les compositions résiniques les plus couramment utilisées pour la fabrication des structures de renforcement précitées comprennent au moins une résine thermodurcissable choisie parmi :
- les résines urée-aldéhyde, par exemple une résine urée-formaldéhyde (GB-A-419 812),
- les résines phénoliques, par exemple une novolaque associée à un agent de réticulation, l'hexaméthylènediamine, (GB-A-1 151 1.74), ou un mélange d'un résol en solution et d'une novolaque solide associée à un agent de réticulation, l'hexaméthylènetétramine (US-A-4 338 357), et
- les mélanges de résines urée-aldéhyde et de résines phénoliques, par exemple un prépolymère urée-formaldéhyde et une résine phénolique au stade A (US-A-4 038 046) ou une résine urée-formaldéhyde et un résol en présence d'un catalyseur acide (US-A-5 551 961).

Les compositions résiniques précitées sont peu coûteuses et elles permettent d'obtenir des structures de renforcement qui présentent de bonnes propriétés, notamment en termes de flexibilité et de pouvoir collant.

Il est en effet important que la structure puisse avoir une flexibilité suffisamment élevée, c'est-à-dire que la résine ne soit pas trop « dure », afin que l'opération de découpe décrite précédemment puisse se faire dans des conditions acceptables, en générant le moins de poussières possible et en faisant en sorte que la résine ne soit pas enlevée au voisinage des bords découpés de la structure (le verre ne doit pas être à nu).

Mais il faut encore que le pouvoir collant (aussi appelé « pégosité » ou « tack » en anglais) ne soit pas trop important, afin de ne pas souiller les outils de découpe, de limiter la contamination lors du stockage par des poussières qui adhérent aux structures, et d'éviter d'avoir à placer un matériau anti-adhésif sur la structure avant qu'elle soit enroulée ou entre les structures découpées.

Sur un plan réglementaire, il est nécessaire de disposer de compositions résiniques non polluantes, c'est-à-dire qui contiennent - mais aussi qui génèrent lors de l'application sur la structure de renforcements ou ultérieurement - le moins possible de composés considérés comme pouvant nuire à la santé humaine ou à l'environnement.

A cet égard, les compositions résiniques précitées ne donnent pas entière satisfaction.

Les résines urée-formaldéhyde ne sont pas stables thermiquement et se dégradent en libérant du formaldéhyde dès que la température dépasse 100°C. Du formaldéhyde peut ainsi être libéré au niveau de la fabrication de la structure de renforcement, au cours du séchage dans l'enceinte chauffée, et lors de l'utilisation de la meule abrasive.

Les résines phénoliques sont obtenues par condensation de phénol et de formaldéhyde, soit.dans un rapport molaire formaldéhyde/phénol inférieur à 1 en présence d'un catalyseur acide (novolaques) soit dans un rapport molaire formaldéhyde/phénol supérieur à 1 en présence d'un catalyseur basique (résols). Les novolaques ne contiennent quasiment pas de formaldéhyde libre mais elles sont utilisées conjointement avec un catalyseur de réticulation tel que l'hexaméthylènediamine et l'hexaméthylènetétramine qui n'est pas stable thermiquement et génère des émissions de formaldéhyde et d'ammoniac lors de la fabrication de la structure de renforcement et de l'utilisation la meule abrasive. Les résols contiennent du formaldéhyde libre en quantité relativement importante.

La présente invention a pour but de mettre au point une composition résinique apte à revêtir une structure de fils de verre destinée à renforcer des articles abrasifs agglomérés, en particulier des meules, qui confère à la structure une grande flexibilité et un faible pouvoir collant, et qui limite le risque d'émissions polluantes en formaldéhyde et en composés azotés.

Ce but est atteint grâce à l'invention qui propose une structure de renforcement revêtue d'une composition résinique comprenant les constituants suivants dans les proportions indiquées, exprimées en pourcentage en poids des matières solides :
- 75 à 98 % d'un mélange d'au moins une novolaque présentant une température de transition vitreuse inférieure ou égale à 60°C et d'au moins une novolaque présentant une température de transition vitreuse supérieure à 60°C,
- 0,5 à 10 % d'au moins une cire,
- 0 à 3,5 % d'au moins un agent plastifiant.

La combinaison des novolaques ayant des températures de transition vitreuse différentes et de la cire s'est révélée particulièrement intéressante pour réaliser une composition résinique apte à revêtir une structure de fils de verre qui convient pour le renforcement d'abrasifs agglomérés. Les propriétés des novolaques et de la cire sont en effet complémentaires.

La novolaque présentant la température de transition la plus basse donne de la souplesse à la structure et permet d'avoir un niveau de flexibilité élevé. Elle permet de compenser la trop grande rigidité de la novolaque à plus haute température de transition vitreuse et ainsi d'ajuster la flexibilité au niveau désiré.

Comme déjà mentionné, il est important d'avoir une flexibilité élevée pour que la découpe de la structure puisse être effectuée correctement, notamment sans que la composition de résine puisse « s'écailler » au niveau des bords en laissant le verre à nu.

De préférence, la novolaque ayant la température de transition vitreuse la plus basse, c'est-à-dire inférieure ou égale à 60°C, représente 50 à 80 % en poids du mélange des novolaques.

De manière avantageuse, la température de transition vitreuse de la novolaque de plus basse température de transition vitreuse est supérieure à 40°C. De la même manière, la température de transition vitreuse de la novolaque ayant la température de transition la plus élevée est supérieure ou égale à 80°C, et avantageusement inférieure ou égale à 100°C.

Les novolaques conformes à l'invention peuvent être choisies parmi les novolaques connues de l'homme du métier obtenues par réaction d'un composé phénolique, de préférence le phénol, et d'un aldéhyde, de préférence le formaldéhyde, en présence d'un catalyseur acide (pH de l'ordre de 4 à 7). De préférence, le rapport molaire formaldéhyde/phénol varie de 0,75 à 0,85. Le choix de la novolaque est opéré en fonction de la température de transition vitreuse désirée.

Les novolaques utilisables dans le cadre de l'invention renferment moins de 0,1 % en poids de formaldéhyde libre, et de préférence moins de 0,05 %.

La cire joue le rôle d'agent anti-adhésion (« anti-blocking ») et permet de compenser le fort pouvoir collant de la novolaque qui a la température de transition vitreuse la plus basse. Comme déjà dit, un pouvoir collant pas trop élevé permet, d'une part, de conserver les structures de renforcement découpées dans un état de propreté très intéressant qui évite la contamination par des poussières, et d'autre part de pouvoir manipuler ces structures découpées avec un risque minimal qu'elles adhèrent les unes aux autres sous une pression modérée, notamment pendant le stockage.

La cire est choisie parmi les cires de paraffines, par exemple les cires de polyéthylène ou de polypropylène, et les cires d'éthylènebisamide, notamment le N,N'-éthylènebis(stéramide). De manière avantageuse, la cire est microcristalline.

De préférence la teneur en cire n'excède pas 5 % en poids des matières solides de la composition résinique, et avantageusement est inférieure ou égale à3%.

L'agent plastifiant contribue à améliorer la souplesse de la composition résinique. A titre d'exemples de tels agents, on peut citer les alkylphosphates, les phtalates, la triéthanolamine, les huiles et les alcools polyhydriques, notamment le glycérol et les glycols.

De préférence, la teneur en agent plastifiant n'excède pas 1 % en poids des matières solides de la composition résinique.

Il convient de noter que la composition résinique revêtant la structure de renforcement selon l'invention ne contient aucun agent de réticulation, ce qui est particulièrement avantageux car les novolaques peuvent ainsi conserver leur caractère thermoplastique initial. La composition résinique n'est pas susceptible d'évoluer dans le temps si bien que la structure de renforcement peut être stockée pendant un période de temps très importante, ce qui est un avantage supplémentaire comparé aux compositions résiniques connues.

La structure de renforcement peut être composée de fils de verre continus, de préférence se présentant sous la forme d'un non-tissé tel qu'un voile ou un mat, d'une grille ou d'un tissu, ou encore d'un mat de fils coupés.

Les fils de verre sont des fils dits « de renforcement » produits industriellement à partir de filets de verre fondu s'écoulant des multiples orifices d'une filière, ces filets étant étirés mécaniquement sous la forme de filaments continus qui sont rassemblés en fils de base, puis collectés par bobinage sur un support en rotation.

Les fils de verre conformes à l'invention sont ainsi des fils de base, et des produits dérivés de ces fils, notamment les assemblages de ces fils de base en stratifils. De tels assemblages sont obtenus en dévidant simultanément plusieurs enroulements de fils de base puis en les rassemblant en mèches qui sont bobinées sur un support en rotation. Les fils de verre peuvent subir une opération de torsion pour produire des fils textiles pour la réalisation de tissus.

Les fils sont constitués de filaments de verre dont le diamètre peut varier dans une large mesure, par exemple de 9 à 24 µm, de préférence 9 à 17 µm. De manière avantageuse, les fils de verre présentent un titre (ou masse linéique) compris entre 34 et 4800 tex, de préférence entre 34 et 1200 tex.

Les fils peuvent être constitués de tout type de verre, notamment E, C et AR (alcali-résistant). De préférence, il s'agit de verre E.

Selon un mode de réalisation préféré, la structure est un tissu composé de fils de verre présentant un grammage qui varie de 100 à 1000 g/m².

La composition résinique en tant que telle, avant son application sur la structure de renforcement, constitue également un objet de l'invention. Ainsi la composition résinique comprend les composés suivants, exprimés en pourcentage en poids
- 25 à 55 % d'au moins une novolaque ayant une température de transition vitreuse inférieure ou égale à 60°C
- 10 à 30 % d'au moins une novolaque ayant une température de transition vitreuse supérieure à 60°C
- 0,5 à 6,5 % d'au moins une cire
- 0 à 2,5 % d'au moins un agent plastifiant
- 25 à 45 % d'au moins un alcool
- 0 à 15% d'eau

A titre d'alcool conforme à l'invention, on peut citer le méthanol, l'éthanol, l'isopropanol et les mélanges de ces alcools.

La préparation de la composition résinique peut se faire par simple mélange des constituants dans un récipient approprié, avantageusement pourvu de moyens d'agitation : de préférence, les novolaques sont sous la forme d'une solution dans l'éthanol ou un mélange d'éthanol et de méthanol, la cire est une dispersion dans l'eau, et l'agent plastifiant est liquide.

Le cas échéant, la composition résinique peut comprendre des additifs tels que des émulsifiants, des pigments, des charges, des agents anti-migration, des coalescents, des agents mouillants, des biocides, des organosilanes, des agents anti-mousse, des colorants, des agents anti-oxydants. La teneur en additifs n'excède pas 3 % des matières solides de la composition résinique.

La fabrication de la structure de renforcement revêtue est effectuée en continu en la faisant passer d'abord dans un bain d'imprégnation constitué de la composition résinique liquide, puis dans l'entrefer d'un dispositif de calandrage composé de deux rouleaux, ce qui permet d'ajuster la teneur en composition résinique à une valeur proche de 30 % en poids de matières solides, et enfin dans une enceinte chauffée afin d'éliminer une partie du solvant. De préférence, l'enceinte comprend une première zone chauffée à une température de l'ordre de 130°C et au moins une deuxième zone chauffée à une température de l'ordre de 110°C, le temps de séjour de la structure de renforcement dans l'ensemble des deux zones étant généralement inférieur à une dizaine de minutes, de préférence variant de 30 secondes à 3 minutes. De préférence, le pourcentage de solvant dans la structure de renforcement est inférieur à 12 %, et avantageusement inférieur à 10 %. La structure de renforcement obtenue est ensuite collectée sous la forme d'une bobine ou découpée soit en feuilles soit directement à la forme et aux dimensions de la meule abrasive finale, ces structures découpées étant ensuite stockées sous la forme d'empilements.

La structure de renforcement conforme à l'invention peut être utilisée notamment pour réaliser articles des abrasifs agglomérés tels que des meules abrasives, ces articles constituant aussi un objet de l'invention.

Ces articles abrasifs peuvent être fabriqués notamment selon les techniques de moulage en compression connues de l'homme du métier. Par exemple, les meules abrasives peuvent être obtenues en déposant à l'intérieur d'un moule plusieurs couches alternées d'un mélange granulaire de particules abrasives et de liant, et de la structure de renforcement préalablement découpée aux dimensions du moule. Le nombre de structures de renforcement varie en fonction du niveau de performances souhaité pour la meule abrasive ; en général, ce nombre reste n'excède pas 10.

Le moule est mis sous une pression suffisante pour former une pièce « crue » (« green » en anglais) qui présente une cohésion telle qu'elle peut être manipulée et traitée dans les étapes suivantes sans modification substantielle de forme et de dimensions. Le moule peut être chauffé pendant la compression (moulage à chaud) à une température qui est généralement inférieure à 170°C, voire 150°C. Le liant à ce stade est à l'état non réticulé.

La pièce crue est retirée du moule et chauffée dans un four à une température permettant de réticuler le liant et de donner un réseau polymérique durci qui confère à la pièce sa forme finale. La réticulation est effectuée selon un cycle de cuisson conventionnel qui consiste à porter la pièce crue à une température de l'ordre de 100°C et à la maintenir à cette température pendant 30 minutes à plusieurs heures afin que les produits volatils formés puissent être évacués. Ensuite, la pièce est chauffée à une température de l'ordre de 200 à 250°C pendant 10 à 35 heures.

La meule abrasive ainsi obtenue peut être utilisée dans tous types d'applications qui requièrent des propriétés d'abrasion, par exemple dans des opérations de ponçage, d'ébavurage, de rectification, et plus particulièrement de découpe de matériaux durs, tels que l'acier.

Les exemples donnés ci-après permettent d'illustrer l'invention sans toutefois la limiter.

Dans ces exemples, on évalue les propriétés de la composition résinique et de la structure de renforcement dans les conditions suivantes:

### Résine

→ la température de transition vitreuse (Tg) est mesurée par DMTA (Dynamic Mechanical Thermal Analysis).
→ la masse molaire moyenne en nombre (Mₙ) et en masse (M_{w}) est déterminée par chromatographie par perméation de gel (GPC) dans les conditions suivantes :
   - phase stationnaire : Styragel® HR4E commercialisé par Waters, maintenue à 30°C
   - phase mobile : tétrahydrofurane (THF)
   - détection : réfractométrie différentielle (ΔRI)
   - calibration : étalons polystyrène

### Composition résinique

→ la flexibilité de la composition résinique est mesurée comme suit : on dépose la composition résinique (teneur pondérale en matières solides : 40-60 %) sur un papier (dimensions : 20 mm x 70 mm ; grammage : 3600 g/m² et on l'étale en une couche de 200 µm d'épaisseur au moyen d'un tire-film. Le papier est séché dans une enceinte chauffée à 140°C pendant 1 minute. On fixe une extrémité libre du papier à un support horizontal et on suspend un poids de 2,8 g à l'autre extrémité. Après 4 minutes, on mesure l'angle θ que fait le papier avec l'horizontale. La flexibilité est convenable lorsque la valeur de l'angle θ est supérieure ou égale à 30°.
→ le pouvoir collant est évalué comme suit : on utilise deux plots cylindriques en aluminium de section circulaire (surface : 3,2 cm²). Sur chaque section, on dépose 0,2 ml de composition résinique et place les plots dans une enceinte ventilée chauffée à 130°C pendant 10 minutes. Après refroidissement pendant 30 minutes à la température ambiante, les plots sont stockés sous atmosphère contrôlée (température : 22°C ; humidité relative : 50 %) pendant une durée variable. On place les surfaces enduites de la composition résinique en contact l'une avec l'autre en appliquant une pression de 50 N pendant 1 minute. On place l'ensemble sur un banc de traction et on mesure la force nécessaire pour séparer les plots. Le pouvoir collant est satisfaisant lorsque la force est inférieure à 30 N.

### Structure de renforcement

→ taux de poussières : un échantillon de structure de renforcement est pesé et plié manuellement sur une longueur de 44 à 46 cm. L'échantillon est déplié et pesé. Le pourcentage de perte de masse de l'échantillon correspond au taux de poussières. Le taux de poussières est un paramètre qui permet d'évaluer l'aptitude à la découpe ; il est considéré comme étant acceptable quand sa valeur est inférieure à 2 %.
→ pouvoir collant : on superpose deux structures de renforcement sous forme de disque de 10 à 12 cm de diamètre et on applique une pression de 50 N pendant 1 minute. On place l'échantillon sur un banc de traction et on mesure la force nécessaire pour séparer les structures. Le pouvoir collant est satisfaisant lorsque la force est inférieure à 5 N.
→ la résistance en traction du fil de chaîne ou de trame est mesurée dans les conditions de la norme ISO 3341 applicable pour des fils de verre jusqu'à 2000 tex. La valeur de la résistance en traction doit être supérieure à 300 N.
→ la perte au feu est mesurée dans les conditions de la norme iso 1887.

### EXEMPLE 1

On prépare une composition résinique comprenant les constituants suivants :

| | (% en poids) | (% matières solides) |
|---|---|---|
| - Novolaque⁽¹⁾ (Tg environ 40°C) | 50,0 | 76,47 |
| - Novolaque⁽²⁾ (Tg environ 80°C) | 13,0 | 20,58 |
| - Cire de polyéthylène⁽³⁾ | 2,0 | 2,95 |
| - Eau | 3,0 | |
| - Alcool | 32,0 | |

La composition résinique les propriétés suivantes :
- flexibilité : 35°
- pouvoir collant :
   0 N à t = 0
   0,13 N à t + 15 jours
   2,37 N à t + 30 jours

### EXEMPLE 2

On prépare une composition résinique comprenant les constituants suivants :

| | (% en poids) | (% matières solides) |
|---|---|---|
| - Novolaque⁽¹⁾ (Tg environ 40°C) | 47,0 | 74,28 |
| - Novolaque⁽²⁾ (Tg environ 80°C) | 13,0 | 20,00 |
| - Cire de polyéthylène⁽³⁾ | 3,5 | 5,72 |
| - Eau | 5,5 | |
| - Alcool | 31,0 | |

La composition résinique les propriétés suivantes :
- flexibilité : 35°
- pouvoir collant :
   0,80 N à t = 0
   1,20 N à t + 15 jours
   1,35 N à t + 30 jours

### EXEMPLE COMPARATIF 1

On prépare une composition résinique dans les conditions de l'exemple 1 modifié en ce qu'elle ne comprend que la novolaque⁽¹⁾.

| | (% en poids) | (% matières solides) |
|---|---|---|
| - Novolaque⁽¹⁾ (Tg environ 40°C) | 65,0 | 100 |
| Alcool | 35,0 | |

La composition résinique les propriétés suivantes :
- flexibilité : >30°
- pouvoir collant : 88,44 N à t = 0

### EXEMPLE COMPARATIF 2

On prépare une composition résinique dans les conditions de l'exemple 1 modifié en ce qu'elle comprend les constituants suivants :

| | (% en poids) | (% matières solides) |
|---|---|---|
| - Novolaque⁽¹⁾ (Tg environ 40°C) | 59,0 | 94,20 |
| - Cire de polyéthylène⁽³⁾ | 3,5 | 5,80 |
| - Eau | 5,5 | |
| - Alcool | 32,0 | |

La composition résinique les propriétés suivantes :
- flexibilité : >30°
- pouvoir collant : 26,95 N à t = 0

### EXEMPLE COMPARATIF 3

On prépare une composition résinique dans les conditions de l'exemple 1 modifié en ce qu'elle comprend les constituants suivants :

| | (% en poids) | (% matières solides) |
|---|---|---|
| - Novolaque⁽¹⁾ (Tg environ 40°C) | 52,0 | 78,80 |
| - Novolaque⁽²⁾ (Tg environ 80°C) | 14,0 | 21,20 |
| - Alcool | 34,0 | |

La composition résinique les propriétés suivantes :
- flexibilité : 35°
- pouvoir collant : 34,40 N à t = 0

### EXEMPLE 3

Cet exemple illustre l'application de la composition résinique dans une installation semi-industrielle.

Sur une ligne d'enduction fonctionnant en continu, on dispose un tissu de fils de verre (grammage : 198 g/m² ; fil de chaîne : EC 204 tex s/z ; fil de trame : RO 408 tex) de 0,5 m de large, déroulé à partir d'une bobine. Sur le trajet, le tissu passe dans un bain d'imprégnation contenant la composition résinique, puis il est traité dans un four comprenant une première section chauffée à 125°C, et une deuxième section chauffée à 115°C, avant d'être collecté sous la forme d'une bobine.

La composition résinique comprend les constituants suivants :

| | (% en poids) | (% matières solides) |
|---|---|---|
| - Novolaque⁽¹⁾ (Tg environ 40°C) | 50,0 | 77,15 |
| - Novolaque⁽²⁾ (Tg environ 80°C) | 14,0 | 20,77 |
| - Cire de polyéthylène⁽³⁾ | 1,3 | 2,08 |
| - Eau | 1,7 | |
| - Alcool | 33,0 | |

Le tissu de renforcement présente les propriétés suivantes :
- Taux de poussières : 0,03 %
- Pouvoir collant : 0 N
- Résistance en traction (fil de chaîne) : 304 N
- Résistance en traction (fil de trame) : 343 N
- Perte au feu : 30 %
- Taux de composés volatils : 4,65 %
   (1) novolaque phénol-formaldéhyde; Mₙ = 829; M_{w} = 2176 ; solution éthanolique à 65 % en poids de matières solides
   (2) novolaque phénol-formaldéhyde ; Mₙ = 1247 ; M_{w} = 5779; solution à 70 % en poids de matières solides dans un mélange éthanol:méthanol 25:5
   (3) commercialisé sous la référence « Hydrocer 69 » par la société SHAMROCK

## Revendications

1. Structure de fils de verre revêtue d'une composition résinique, notamment pour le renforcement d'articles abrasifs agglomérés, **caractérisée en ce que** la composition résinique comprend les constituants suivants dans les proportions indiquées, exprimées en pourcentage en poids des matières solides:
- 75 à 98 % d'un mélange d'au moins une novolaque présentant une température de transition vitreuse inférieure ou égale à 60°C et d'au moins une novolaque présentant une température de transition vitreuse supérieure à 60°C,
- 0,5 à 10 % d'au moins une cire,
- 0 à 3,5 % d'au moins un agent plastifiant.

2. Structure selon la revendication 1, **caractérisée en ce que** la novolaque ayant la température de transition vitreuse la plus basse représente 50 à 80 % en poids du mélange des novolaques.

3. Structure selon la revendication 1 ou 2, **caractérisée en ce que** la novolaque ayant la température de transition la plus basse présente une température de transition vitreuse supérieure à 40°C.

4. Structure selon l'une des revendications 1 à 3, **caractérisée en ce que** la novolaque ayant la température de transition la plus haute présente une température de transition vitreuse supérieure ou égale à 80°C, de préférence inférieure ou égale à 100°C.

5. Structure selon l'une des revendications 1 à 4, **caractérisée en ce que** les novolaques sont obtenues par réaction de phénol et de formaldéhyde dans un rapport molaire formaldéhyde/phénol qui varie de 0,75 à 0,85.

6. Structure selon l'une des revendications 1 à 5, **caractérisée en ce que** la cire est choisie parmi les cires de paraffines, de préférence une cire de polyéthylène ou de polypropylène, et les cires d'éthylènebisamide, de préférence le N,N'-éthylènebis(stéramide).

7. Structure selon l'une des revendications 1 à 6, **caractérisée en ce que** la teneur en cire n'excède pas 5 %, de préférence est inférieure ou égale à 3 % en poids des matières solides de la composition résinique.

8. Structure selon l'une des revendications 1 à 7, **caractérisée en ce que** l'agent plastifiant est choisi parmi les alkylphosphates, les phtalates, la triéthanolamine, les huiles et les alcools polyhydriques.

9. Structure selon l'une des revendications 1 à 8, **caractérisée en ce que** la teneur en agent plastifiant n'excède pas 1 % en poids des matières solides de la composition résinique.

10. Structure selon l'une des revendications 1 à 9, **caractérisée en ce qu'**elle est composée de fils de verre continus, de préférence se présentant sous la forme d'un non-tissé, tel qu'un voile ou un mat, d'une grille ou d'un tissu, ou d'un mat de fils coupés.

11. Structure selon la revendication 10, **caractérisée en ce que** les fils présentent un diamètre variant de 9 à 24 µm, de préférence 9 à 17 µm.

12. Structure selon la revendication 10 ou 11, **caractérisée en ce que** les fils présentent un titre (ou masse linéique) compris entre 34 et 4800 tex, de préférence entre 34 et 1200 tex.

13. Structure selon l'une des revendications 1 à 12, **caractérisée en ce qu'**elle se présente sous la forme d'un tissu présentant un grammage variant de 100 à 1000 g/m².

14. Composition résinique apte à revêtir la structure selon l'une des revendications 1 à 13, **caractérisée en ce qu'**elle comprend les composés suivants, exprimés en pourcentage en poids
- 25 à 55 % d'au moins une novolaque ayant une température de transition vitreuse inférieure ou égale à 60°C
- 10 à 30 % d'au moins une novolaque ayant une température de transition vitreuse supérieure à 60°C
- 0,5 à 6,5 % d'au moins une cire
- 0 à 2,5 % d'au moins un agent plastifiant
- 25 à 45 % d'au moins un alcool
- 0 à 15 % d'eau

15. Composition résinique selon la revendication 14, **caractérisée en ce que** l'alcool est choisi parmi le méthanol, l'éthanol, l'isopropanol et les mélanges de ces alcools.

16. Article abrasif aggloméré à base de particules abrasives liées par un liant, **caractérisé en ce qu'**il renferme une structure de renforcement selon l'une des revendications 1 à 13.

17. Article selon la revendication 16, **caractérisé en ce qu'**il s'agit d'une meule abrasive.

## Claims

1. A glass fiber structure coated with a resin composition, notably for the reinforcement of bonded abrasive articles, **characterized in that** the resin composition comprises the following constituents in the proportions indicated, expressed in percentage by weight of solid matter:
- 75 to 98 % of a mixture of a least one novolac having a glass transition temperature lower than or equal to 60°C and at least one novolac having a glass transition temperature above 60°C,
- 0.5 to 10% of at least one wax,
- 0 to 3.5% of at least one plasticizing agent.

2. The structure as claimed in claim 1, **characterized in that** the novolac having the lower glass transition temperature represents 50 to 80% by weight of the mixture of novolacs.

3. The structure as claimed in claim 1 or 2, **characterized in that** the novolac having the lower glass transition temperature has a glass transition temperature above 40°C.

4. The structure as claimed in one of claims 1 to 3, **characterized in that** the novolac having the higher glass transition temperature has a glass transition temperature above or equal to 80°C, preferably below or equal to 100°C.

5. The structure as claimed in one of claims 1 to 4, **characterized in that** the novolacs are obtained by reacting phenol and formaldehyde in a formaldehyde/phenol molar ratio that varies from 0.75 to 0.85.

6. The structure as claimed in one of claims 1 to 5, **characterized in that** the wax is chosen from paraffin waxes, preferably a polyethylene or polypropylene wax, and ethylenebisamide waxes, preferably N,N'-ethylenebis(steramide).

7. The structure as claimed in one of claims 1 to 6, **characterized in that** the wax content does not exceed 5%, and preferably is less than or equal to 3% by weight of solid matter of the resin composition.

8. The structure as claimed in one of claims 1 to 7, **characterized in that** the plasticizing agent is chosen from alkylphosphates, phthalates, triethanolamine, oils and polyhydric alcohols.

9. The structure as claimed in one of claims 1 to 8, **characterized in that** the plasticizing agent content does not exceed 1% by weight of solid matter of the resin composition.

10. The structure as claimed in one of claims 1 to 9, **characterized in that** it is composed of continuous glass yarns, preferably in the form of a nonwoven such as a web or a mat, a mesh or fabric, or of a mat of cut strands.

11. The structure as claimed in claim 10, **characterized in that** the yarns have a diameter varying from 9 to 24 µm, preferably 9 to 17 µm.

12. The structure as claimed in claim 10 or 11, **characterized in that** the yarns have a count (or linear mass) of between 34 and 4800 tex, preferably between 34 and 1200 tex.

13. The structure as claimed in one of claims 1 to 12, **characterized in that** it is in the form of a fabric having a grammage varying from 100 to 1000 g/m²_{.}

14. A resin composition capable of coating the structure as claimed in one of claims 1 to 13, **characterized in that** it comprises the following compounds, expressed in percentage by weight
- 25 to 55% of at least one novolac having a glass transition temperature lower than or equal to 60°C,
- 10 to 30% of at least one novolac having a glass transition temperature above 60°C,
- 0.5 to 6.5% of at least one wax,
- 0 to 2.5% of at least one plasticizing agent,
- 25 to 45% of at least one alcohol,
- 0 to 15% of water.

15. The resin composition as claimed in claim 14, **characterized in that** the alcohol is chosen from methanol, ethanol, isopropanol and mixtures of these alcohols.

16. A bonded abrasive article based on abrasive particles bonded with a binder, **characterized in that** it contains a reinforcing structure as claimed in one of claims 1 to 13.

17. The article as claimed in claim16, **characterized in that** it consists of an abrasive grinding wheel.

## Patentansprüche

1. Glasfaserstruktur, die mit einer Harzzusammensetzung überzogen ist, insbesondere zur Verstärkung von gebundenen Schleifkörpern, **dadurch gekennzeichnet, dass** die Harzzusammensetzung die folgenden Bestandteile in den angegebenen, in Gewichtsprozent der Feststoffe ausgedrückten Verhältnissen umfasst:
- 75 bis 98 % eines Gemischs aus wenigstens einem Novolak, das eine Glasübergangstemperatur von unter oder gleich 60 °C aufweist, und wenigstens einem Novolak, das eine Glasübergangstemperatur von über 60 °C aufweist,
- 0,5 bis 10 % wenigstens eines Wachses,
- 0 bis 3,5 % wenigstens eines Weichmachers.

2. Struktur nach Anspruch 1, **dadurch gekennzeichnet, dass** das die niedrigste Glasübergangstemperatur aufweisende Novolak 50 bis 80 Gew.-% des Novolak-Gemischs ausmacht.

3. Struktur nach Anspruch 1 oder 2, **dadurch gekennzeichnet, dass** das die niedrigste Übergangstemperatur aufweisende Novolak eine Glasübergangstemperatur von über 40 °C aufweist.

4. Struktur nach einem der Ansprüche 1 bis 3, **dadurch gekennzeichnet, dass** das die höchste Übergangstemperatur aufweisende Novolak eine Glasübergangstemperatur von über oder gleich 80 °C, vorzugsweise von unter oder gleich 100 °C aufweist.

5. Struktur nach einem der Ansprüche 1 bis 4, **dadurch gekennzeichnet, dass** die Novolake durch Reaktion von Phenol und Formaldehyd in einem Molverhältnis von Formaldehyd zu Phenol, das von 0,75 bis 0,85 variiert, gewonnen werden.

6. Struktur nach einem der Ansprüche 1 bis 5, **dadurch gekennzeichnet, dass** das Wachs aus den Paraffinwachsen, vorzugsweis einem Polyethylen- oder Polypropylenwachs, und den Ethylen-bis-amidwachsen, vorzugsweise N,N'-Ethylen-bis(stearamid) ausgewählt ist.

7. Struktur nach einem der Ansprüche 1 bis 6, **dadurch gekennzeichnet, dass** der Wachsgehalt 5 Gew.-% der Feststoffe der Harzzusammensetzung nicht überschreitet, vorzugsweise kleiner oder gleich 3 Gew.-% ist.

8. Struktur nach einem der Ansprüche 1 bis 7, **dadurch gekennzeichnet, dass** der Weichmacher aus den Alkylphosphaten, den Phthalaten, Triethanolamin, den Ölen und den mehrwertigen Alkoholen ausgewählt ist.

9. Struktur nach einem der Ansprüche 1 bis 8, **dadurch gekennzeichnet, dass** der Gehalt an Weichmacher 1 Gew.-% der Feststoffe der Harzzusammensetzung nicht überschreitet.

10. Struktur nach einem der Ansprüche 1 bis 9, **dadurch gekennzeichnet, dass** sie von Endlosglasfasern, die vorzugsweise in Form eines Vlieses, wie eines Flors oder einer Matte, eines Gitters oder eines Gewebes vorliegen, oder von einer Matte aus geschnittenen Fasern gebildet ist.

11. Struktur nach Anspruch 10, **dadurch gekennzeichnet, dass** die Fasern einen Durchmesser aufweisen, der von 9 bis 24 µm, vorzugsweise von 9 bis 17 µm variiert.

12. Struktur nach Anspruch 10 oder 11, **dadurch gekennzeichnet, dass** die Fasern einen Titer (oder Feinheit) im Bereich zwischen 34 und 4800 tex, vorzugsweise zwischen 34 und 1200 tex aufweisen.

13. Struktur nach einem der Ansprüche 1 bis 12, **dadurch gekennzeichnet, dass** sie in Form eines Gewebes vorliegt, das eine von 100 und 1000 g/m² variierende flächenbezogene Masse aufweist.

14. Harzzusammensetzung, die geeignet ist, die Struktur nach einem der Ansprüche 1 bis 13 zu überziehen, **dadurch gekennzeichnet, dass** sie die folgenden Bestandteile, ausgedrückt in Gewichtsprozent umfasst
- 25 bis 55 % wenigstens eines Novolaks, das eine Glasübergangstemperatur von unter oder gleich 60 °C aufweist,
- 10 bis 30 % wenigstens eines Novolaks, das eine Glasübergangstemperatur von über 60 °C aufweist,
- 0,5 bis 6,5 % wenigstens eines Wachses,
- 0 bis 2,5 % wenigstens eines Weichmachers,
- 25 bis 45 % wenigstens eines Alkohols,
- 0 bis 15 % Wasser.

15. Harzzusammensetzung nach Anspruch 14, **dadurch gekennzeichnet, dass** der Alkohol aus Methanol, Ethanol, Isopropanol und den Mischungen dieser Alkohole ausgewählt ist.

16. Gebundener Schleifkörper auf der Basis von durch ein Bindemittel gebundenen Schleifpartikeln, **dadurch gekennzeichnet, dass** er eine Verstärkungsstruktur nach einem der Ansprüche 1 bis 13 einschließt.

17. Körper nach Anspruch 16, **dadurch gekennzeichnet, dass** es sich um eine Schleifscheibe handelt.
